# EUROPÄISCHE PATENTSCHRIFT

(11) **EP 2 863 145 B1**
(45) Veröffentlichungstag und Bekanntmachung des Hinweises auf die Patenterteilung: **15.01.2020**
(21) Anmeldenummer: 14189326.3
(22) Anmeldetag: 17.10.2014
(51) Int. Cl.: F24S 23/74, F24S 30/425, F24S 30/00

(54) **VORRICHTUNG ZUM ERWÄRMEN EINES WÄRMETRÄGERS**
DEVICE FOR HEATING A HEAT DISTRIBUTOR
PROCÉDÉ DE CHAUFFAGE D'UN CALOPORTEUR

(30) Priorität: 17.10.2013 AT 506722013
(43) Veröffentlichungstag der Anmeldung: 22.04.2015
(73) Patentinhaber: Kornmüller, Manfred, 3353 Seitenstetten (AT)
(72) Erfinder: Kornmüller, Manfred, 3353 Seitenstetten (AT)
(74) Vertreter: Hübscher & Partner Patentanwälte GmbH

(56) Entgegenhaltungen:
- WO-A1-2011/044641
- WO-A2-2009/146215
- DE-A1-102006 036 150
- US-A1- 2013 160 816

## Beschreibung

Die Erfindung bezieht sich auf eine Vorrichtung zum Erwärmen eines Wärmeträgers mit einem rinnenförmigen Sonnenkollektor aus beidseitig von einem Trägerrohr abstehenden, das Rinnenprofil durch eine Bogenform vorgebenden und in Richtung der Trägerrohrachse nebeneinandergereihten Tragsegmenten für Spiegelsegmente, mit das Trägerrohr aufnehmenden Stehern, die an ihren Enden Lageraufnahmen mit Stützrollen zur drehbaren und axial verschiebbaren Lagerung des Trägerrohrs aufweisen, und mit vom Trägerrohr radial abstehenden Tragarmen für ein koaxial zum Rinnenprofil des Sonnenkollektors verlaufendes Absorberrohr.

Zur Ausnützung von Sonnenenergie zur Erwärmung eines Wärmeträgers ist es bekannt, rinnenförmige Sonnenkollektoren mit einem parabolförmigen Querschnitt einzusetzen und koaxial zum Rinnenprofil, also im Brennpunkt des parabolförmigen Querschnitts, ein Absorberrohr vorzusehen, auf dem die an einer spiegelnden Rinnenauskleidung reflektierte Sonnenstrahlung fokussiert wird. Um Spiegelsegmente entsprechend der parabolischen Rinnenform anzuordnen und den rinnenförmigen Sonnenkollektor um eine zur Längsachse des Rinnenprofils parallele Achse dem Sonnenstand nachführen zu können, wird üblicherweise ein Traggestell mit einem eine Schwenkwelle bildenden Trägerrohr vorgesehen, an dem beidseitig abstehende, das Rinnenprofil durch eine Bogenform vorgebende, in Richtung der Trägerrohrachse nebeneinandergereihte Tragsegmente zur Aufnahme von Spiegelsegmenten befestigt sind, die sich zufolge einer entsprechenden Druckbelastung ihrer axialen Längsränder durchbiegen und an die Bogenform der Tragsegmente anschmiegen.

Um bei der Lagerung des Trägerrohrs einfache Montagebedingungen sicherzustellen und Wärmedehnungen des Trägerrohrs zu berücksichtigen, ist es bekannt (DE 10 2009 041 267 A1), das Trägerrohr in nach oben offenen Lagergabeln von über seine Länge verteilten Stehern zu lagern. Zu diesem Zweck ist das Trägerrohr entsprechend der Steheraufteilung in Längsabschnitte unterteilt, die miteinander über Verbindungsflansche verschraubt sind. Zwischen den Verbindungsflanschen sind radial vorstehende Lagerscheiben eingespannt, die sich auf Stützrollen der Lagergabeln abstützen. Da diese die Lagerscheiben zwischen Bunden aufnehmenden Stützrollen auf zur Trägerrohrachse parallelen Achsen verschiebbar gelagert sind, kann das auf den Stützrollen drehbar gelagerte Trägerrohr gegenüber den Lagergabeln zusätzlich axial verlagert werden. Trotz des Konstruktionsaufwands fehlen bei dieser bekannten Vorrichtung Vorkehrungen, um die Tragsegmente für die Spiegelsegmente und die vom Trägerrohr radial abstehenden Tragarme für das Absorberrohr in einfacher Weise gegenüber dem Trägerrohr ausrichten zu können. Abgesehen davon, bleiben die Wärmebelastungen des Absorberrohrs bei der Konstruktion des Traggestells unberücksichtigt.

Um einen vorteilhaften Anschluss der Tragsegmente für die Spiegelsegmente am Trägerrohr zu ermöglichen, ist es darüber hinaus bekannt (EP 2 604 948 A1), das Trägerrohr auf einander gegenüberliegenden Längsseiten mit zwei Anschlussflächen für die Tragsegmente zu versehen, die eine gegen die Spiegelsegmente offene, faserverstärkte Kunststoffschale mit einer an der zugehörigen Anschlussfläche des Trägerrohrs befestigten Stirnwand bilden, doch ist für den Tragsegmentanschluss eine aufwendige Gestaltung des Trägerrohrs erforderlich.

Der Erfindung liegt somit die Aufgabe zugrunde, für einen rinnenförmigen Sonnenkollektor ein Traggestell so auszubilden, dass sich einfache Konstruktionsbedingungen ergeben, die sowohl die Montage als auch die auftretenden Wärmebelastungen vorteilhaft berücksichtigen.

Ausgehend von einer Vorrichtung der eingangs geschilderten Art löst die Erfindung die gestellte Aufgabe dadurch, dass das Trägerrohr, das einen Querschnitt in Form eines regelmäßigen Vielecks, vorzugsweise eines Vierecks, besitzt, im Bereich der Lageraufnahmen mit in axialer Richtung gleitfähig an den Stützrollen abgestützten Lagerringen versehen ist und in an die Querschnittsform des Trägerrohrs angepasste Zentrierausnehmungen der Tragsegmente und der Tragarme formschlüssig eingreift, und dass die Tragarme als flache, senkrecht zur Trägerrohrachse ausgerichtete Biegeträger ausgebildet sind und das Absorberrohr in einem Wärmeisolierring aufnehmen.

Die Ausbildung des Trägerrohrs vorzugsweise als Vierkantrohr stellt eine einfache Voraussetzung für eine konstruktive Vorgabe der Ausrichtung der Tragsegmente für die Spiegelsegmente und der Tragarme für das Absorberrohr gegenüber dem Trägerrohr dar, weil ja lediglich die Tragsegmente und die Tragarme mit einer entsprechenden, rechtwinkeligen Zentrieraussparung versehen werden müssen, in die das Trägerrohr zur radialen Ausrichtung der Tragsegmente und Tragarme formschlüssig eingreift. Anstelle eines Vierkantrohrs kann aber Selbstverständlich auch ein Trägerrohr mit einem anderen Vieleckquerschnitt, beispielsweise mit einem achteckigen Querschnitt eingesetzt werden, um die durch die Querschnittsform des Trägerrohrs vorgegebene Ausrichtung der Tragsegmente und Tragarme nützen zu können. Die Auswahl wird im Allgemeinen von den im Handel erhältlichen Vieleckrohren abhängen.

Es ist allerdings für eine koaxiale Drehlagerung des vieleckigen Trägerrohrs auf den Stehern eines Traggestells zu sorgen. Zu diesem Zweck weist das vieleckige Trägerrohr im Bereich der Lageraufnahmen der Steher Lagerringe auf, die auf den Stützrollen der Lageraufnahmen drehbar und axial verschiebbar gehalten werden, sodass sich zwischen dem Trägerrohr und den Stehern ein automatischer Längenausgleich ergibt, der nicht nur bei der Montage des Sonnenkollektors wirksam wird, sondern auch Wärmedehnungen des Trägerrohrs berücksichtigt.

Das Absorberrohr, das im Brennpunkt des parabolischen Rinnenprofilquerschnitts angeordnet ist, wird gegenüber den Tragarmen stärker erwärmt, was einen Dehnungsausgleich erfordert. Da die Tragarme als flache, senkrecht zur Trägerrohrachse ausgerichtete Biegeträger ausgebildet sind, können die Tragarme bei einer Wärmedehnung des Absorberrohrs zum Dehnungsausgleich um zur Achse des Trägerrohrs und zur Längsachse der Tragarme senkrechte Biegeachsen ausgelenkt werden. Die Halterung des Absorberrohrs in Wärmeisolierringen der Biegeträger verhindert, dass Wärme vom Absorberrohr über die Tragarme auf das Traggestell abgeleitet wird.

Besonders einfache Montagebedingungen ergeben sich, wenn die Lageraufnahmen an den Enden der Steher eine nach oben offene, durch einen lösbaren Lagerbügel schließbare Lagergabel bilden. Die einzelnen Rohrschüsse des aus diesen Rohrschüssen zusammengeflanschten Trägerrohrs können somit von oben auf die Stützrollen der Lagergabeln aufgelegt werden, bevor die Lageraufnahmen an den Enden der Steher über entsprechende Lagerbügel geschlossen werden, um ein Abheben des Trägerrohrs von den Stützrollen zu unterbinden.

Die Anordnung des Absorberrohrs auf den Tragarmen, die in einfacher Weise über Befestigungswinkel mit dem Trägerrohr in der durch die Zentrierausnehmungen vorgegebenen Arbeitsstellung verbunden werden können, wird durch eine geteilte Aufnahme der Tragarme und durch einen ebenfalls geteilten Wärmeisolierring erleichtert. Bei einer durch die geteilte Ausführung ermöglichten, offenen Montagestellung kann somit das Absorberrohr in die eine Hälfte des Wärmeisolierrings eingelegt werden, bevor der Wärmeisolierring durch das Aufsetzen der anderen Hälfte ergänzt und die Aufnahme nach dem Einsetzen des Absorberrohrs geschlossen wird.

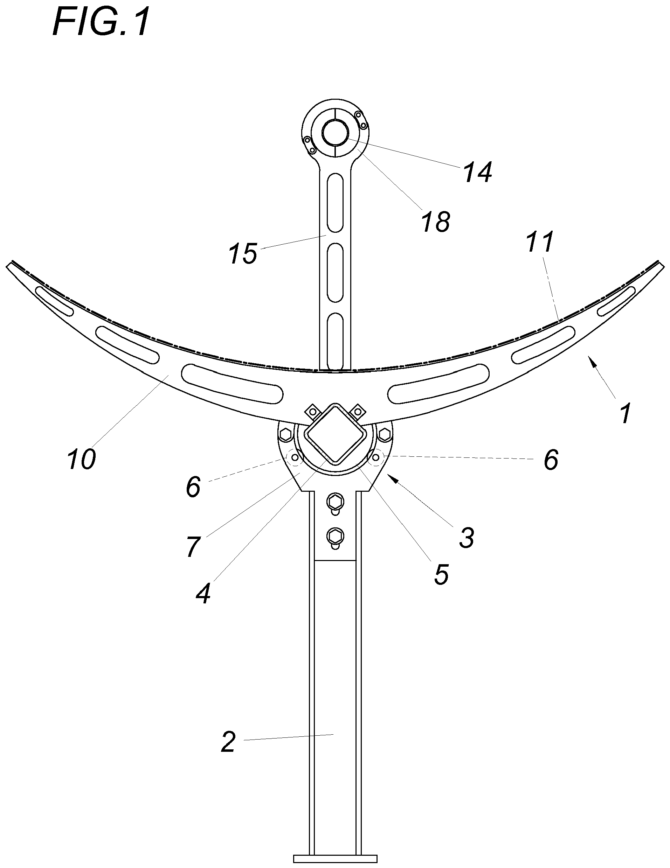

In der Zeichnung ist der Erfindungsgegenstand beispielsweise dargestellt. Es zeigen
- Fig. 1: eine erfindungsgemäße Vorrichtung zum Erwärmen eines Wärmeträgers in einem vereinfachten Querschnitt.

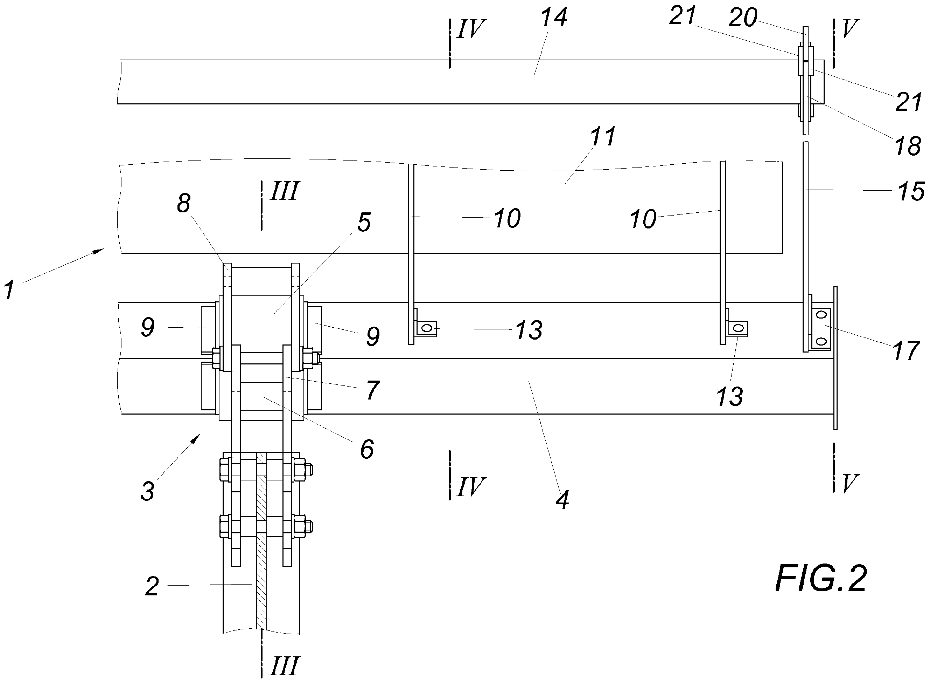

- Fig. 2: dieser Vorrichtung ausschnittsweise in einer zum Teil aufgerissene Seitenansicht in einem größeren Maßstab,

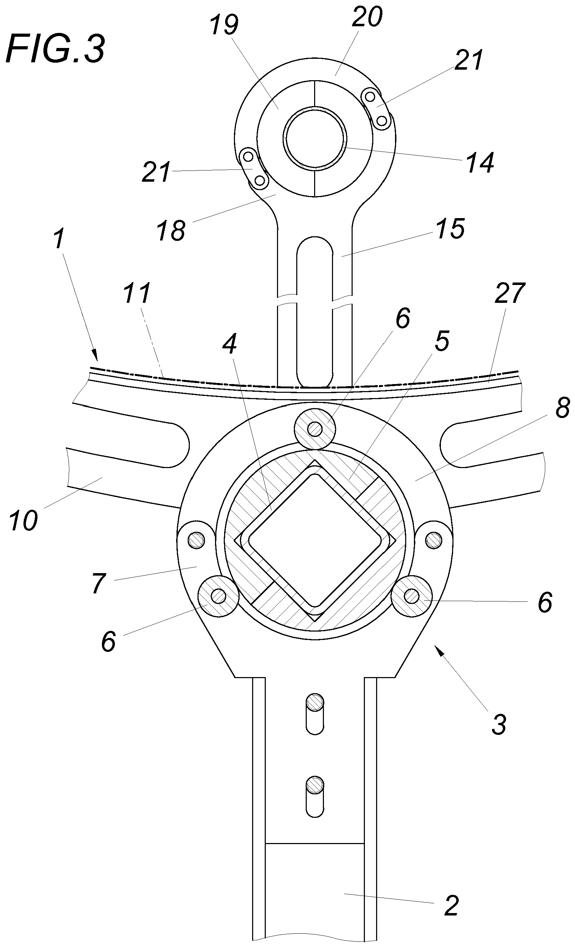

- Fig. 3: einen Schnitt nach der Linie III-III der Fig. 2,
- Fig. 4: einen Schnitt nach der Linie IV-IV der Fig. 2,
- Fig. 5: einen Schnitt nach der Linie V-V der Fig. 2 und
- Fig. 6: den Sonnenkollektor ausschnittsweise im Bereich eines Endes der Trag-segmente in einem Querschnitt in einem größeren Maßstab.

Die Vorrichtung zum Erwärmen eines Wärmeträgers gemäß dem dargestellten Ausführungsbeispiel weist ein Traggestell aus über die Länge des Sonnenkollektors 1 verteilten Stehern 2 auf, die an ihren Enden mit einer Lageraufnahme 3 für ein Trägerrohr 4 versehen sind. Dieses Trägerrohr 4 ist mit einem quadratischen Querschnitt ausgebildet und trägt im Bereich der Lageraufnahmen 3 Lagerringe 5, die an Stützrollen 6 der Lageraufnahmen 3 drehbar und axial verschiebbar abgestützt sind. Die Lageraufnahmen 3 an den Enden der Steher 2 bilden nach oben offene Lagergabeln 7, die durch einen Lagerbügel 8 zu einer geschlossen Lageraufnahme 3 ergänzt werden. Im Bereich des Lagerbügels 8 ist eine zusätzliche Stützrolle 6 vorgesehen, sodass die Lagerringe 5 zwischen den drei Stützrollen 6 der Lageraufnahmen 3 zentrisch gehalten werden. Zur einfachen Montage der Lagerringe 5 auf dem viereckigen Trägerrohr 4 können die Lagerringe 5 geteilt ausgeführt und mit Hilfe von Befestigungswinkeln 9 an den Außenwänden des Trägerrohrs 4 angeschraubt werden. Zur Höhenausrichtung sind die Lageraufnahmen 3 an den Stehern 2 der Höhe nach verstellbar gehalten.

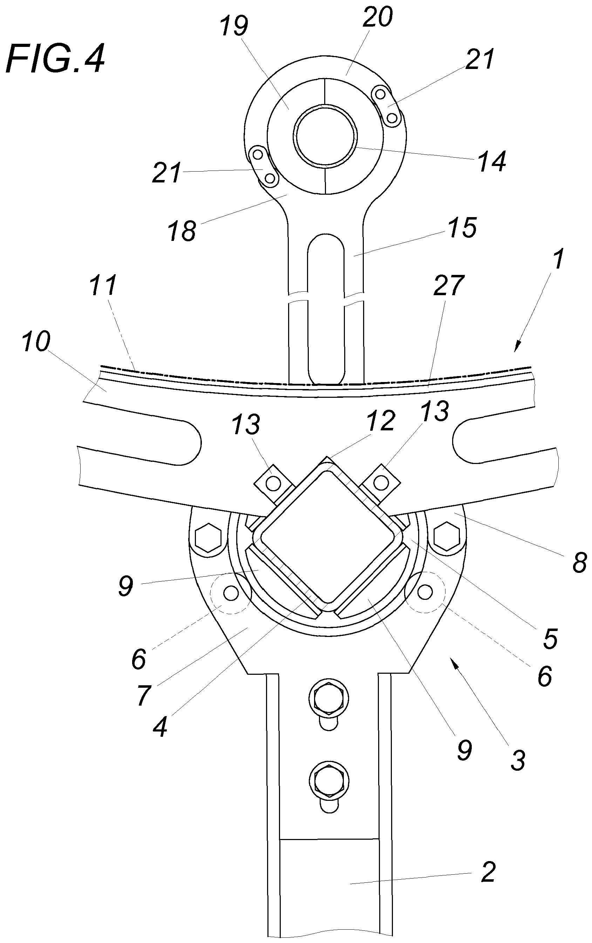

Der Sonnenkollektor 1 umfasst beidseitig vom Trägerrohr 4 abstehende, das parabolische Rinnenprofil des Sonnenkollektors 1 durch eine entsprechende Bogenform bestimmende, in Richtung der Trägerrohrachse nebeneinandergereihte Tragsegmente 10 für Spiegelsegmente 11, die aufgrund einer Druckbelastung ihrer äußeren Längsränder gebogen werden und sich an die Bogenform der Tragsegmente 10 anschmiegen. Die Ausrichtung der Tragsegmente 10 gegenüber dem Trägerrohr 4 erfolgt durch rechtwinkelige Zentrierausnehmungen 12 der Tragsemente 10, die sich bei der Montage der Tragsegmente 10 formschlüssig an zwei einander bezüglich einer Längskante benachbarte Außenwände des viereckigen Trägerrohrs formschlüssig anlegen und in dieser Arbeitsstellung mit Hilfe von Befestigungswinkeln 13 am Trägerrohr 4 festgelegt sind, wie dies insbesondere der Fig. 4 entnommen werden kann. Das vorzugsweise durch einzelne, zusammenflanschbare Rohrschüsse zusammengesetzte Trägerrohr 4 gibt somit die Ausrichtung und Zentrierung der Tragsemente 10 des Sonnenkollektors 1 vor, die aufgrund der konstruktiv sichergestellten Zentrierung als flache Stegsegmente ausgebildet sein können.

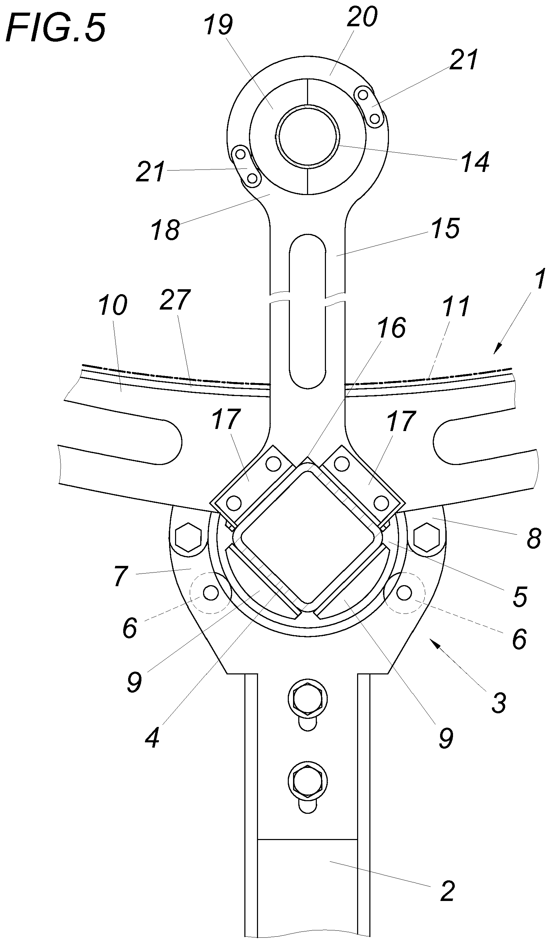

Das über den rinnenförmigen Sonnenkollektor 1 erwärmbare Absorberrohr 14, durch das ein zu erwärmender Wärmeträger gepumpt wird, wird mit Hilfe von Tragarmen 15 im Brennpunkt des parabolförmigen Querschnitts des Rinnenprofils des Sonnenkollektors 1 gehalten. Die Tragarme 15 müssen daher ebenfalls gegenüber dem Trägerrohr 4 ausgerichtet werden, was in analoger Art zu den Tragsegmenten 10 erreicht wird, indem die Tragarme 15 mit entsprechenden Zentrierausnehmungen 16 versehen werden, wie dies der Fig. 5 entnommen werden kann. Die Befestigung der gegenüber den benachbarten Außenwänden des viereckigen Trägerrohrs 4 ausgerichteten Tragarme 15 wird wiederum durch Befestigungswinkel 17 erreicht.

Die Tragarme 15 selbst bilden flache, senkrecht zum Trägerrohr 4 ausgerichtete Biegeträger, die das Absorberrohr 14 in einer Aufnahme 18 unter Zwischenschaltung eines Wärmeisolierrings 19 aufnehmen. Zur Vereinfachung der Montage des Absorberrohrs 14 sind die Aufnahme 18 sowie der Wärmeisolierring 19 der Tragarme 15 geteilt ausgeführt. Das mit den geteilten Wärmeisolierringen 19 umschlossene Absorberrohr 14 wird in die gabelförmigen, offenen Aufnahmen 18 der Trägerarme 15 eingesetzt, bevor die Aufnahmen 18 durch einen Bügel 20 geschlossen werden, der gemäß dem Ausführungsbeispiel über Laschen 21 mit dem gabelförmigen Teil der Aufnahme 18 verbunden wird. Durch die Zwischenschaltung der Wärmeisolierringe 19 wird eine Wärmeableitung vom Absorberrohr 14 über die Tragarme 15 auf das Trägerrohr 4 unterbunden. Die Ausbildung der Tragarme 15 als flache Biegeträger ermöglicht in einfacher Weise einen Längenausgleich bei den zu erwartenden wärmebedingten Längendehnungen des Absorberrohrs 14, weil die durch die Tragarme 15 geformten Biegeträger in Längsrichtung des Absorberrohrs 4 elastisch ausgebogen werden können.

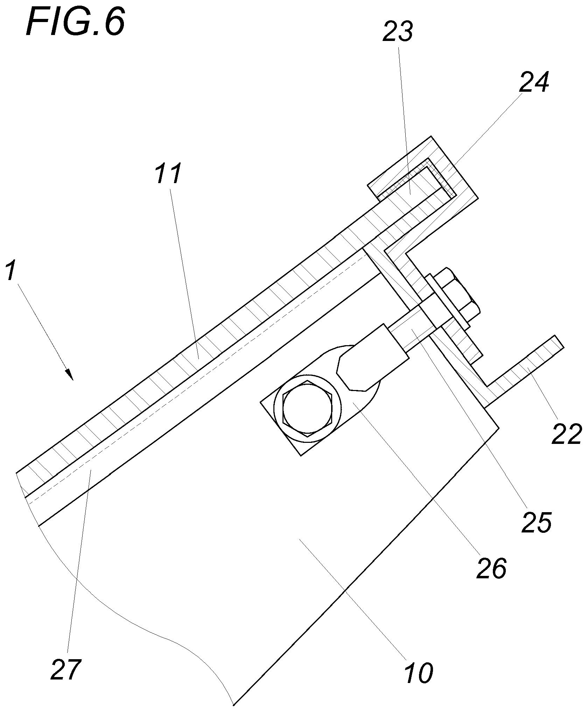

Das erfindungsgemäße Traggestell für den Sonnenkollektor 1 erlaubt den Einsatz einfacher Tragsegmente 10 in Form von beispielsweise ebenen Blechzuschnitten. Um die Formstabilität eines Sonnenkollektors 1 aus solchen ebenen Blechzuschnitten als Tragsegmente 10 zu verbessern, können die Tragsegmente 10 gemäß der Fig. 6 an ihren äußeren Enden über ein Auflageprofil 22 miteinander verbunden werden, das eine zusätzliche Abstützung der Spiegelsegmente 11 entlang ihrer äußeren Längsränder 23 ermöglicht. Die Druckbelastung dieser Längsränder 23 zum Biegen und Andrücken der Spiegelsegmente 11 an die Bogenform der Tragsegmente 10 erfolgt über Spannelemente 24, die die Längsränder 23 der Spiegelsegmente 11 umgreifen und mit Hilfe von Zugankern 25 beaufschlagt werden können, die in zu beiden Seiten der Tragsegmente 10 vorgesehenen Halterungen 26 schraubverstellbar gehalten sind. Diese Zuganker 25 können vorteilhaft auch zur Befestigung der Auflageprofile 22 herangezogen werden. Zu diesem Zweck durchsetzen die Zuganker 25 das jeweilige Auflageprofil 22, das somit beim Beaufschlagen der Spannelemente 24 an die Stirnseite der Tragsegmente 10 angedrückt wird.

Um beim Einsatz von Spiegelgläsern den Abrieb der Spiegelfläche im Bereich der Tragsegmente 10 zu unterbinden, empfiehlt es sich, die Tragsegmente 10 auf der den Spiegelsegmenten 11 zugekehrten Seite mit einem elastischen Schutzprofil 27 abzudecken.

## Patentansprüche

1. Vorrichtung zum Erwärmen eines Wärmeträgers mit einem rinnenförmigen Sonnenkollektor (1) aus beidseitig von einem Trägerrohr (4) abstehenden, das Rinnenprofil durch eine Bogenform vorgebenden und in Richtung der Trägerrohrachse nebeneinandergereihten Tragsegmenten (10) für Spiegelsegmente (11), mit das Trägerrohr (4) aufnehmenden Stehern (2), die an ihren Enden Lageraufnahmen (3) mit Stützrollen (6) zur drehbaren und axial verschiebbaren Lagerung des Trägerrohrs (4) aufweisen, und mit vom Trägerrohr (4) radial abstehenden Tragarmen (15) für ein koaxial zum Rinnenprofil des Sonnenkollektors (1) verlaufendes Absorberrohr (14), **dadurch gekennzeichnet, dass** das Trägerrohr (4), das einen Querschnitt in Form eines regelmäßigen Vielecks, vorzugsweise eines Vierecks, besitzt, im Bereich der Lageraufnahmen (3) mit in axialer Richtung gleitfähig an den Stützrollen (6) abgestützten Lagerringen (5) versehen ist und in an die Querschnittsform des Trägerrohrs (4) angepasste Zentrierausnehmungen (12, 16) der Tragsegmente (10) und der Tragarme (15) formschlüssig eingreift, und dass die Tragarme (15) als flache, senkrecht zur Trägerrohrachse ausgerichtete Biegeträger ausgebildet sind und das Absorberrohr (14) in einem Wärmeisolierring (19) aufnehmen.

2. Vorrichtung nach Anspruch 1, **dadurch gekennzeichnet, dass** die Lageraufnahmen (3) an den Enden der Steher (2) eine nach oben offene, durch einen lösbaren Lagerbügel (8) schließbare Lagergabel (7) bilden.

3. Vorrichtung nach Anspruch 1 oder 2, **dadurch gekennzeichnet, dass** die Tragarme (15) eine geteilte Aufnahme (18) für den ebenfalls geteilten Wärmeisolierring (19) zur Halterung des Absorberrohrs (14) aufweisen.

## Claims

1. Apparatus for heating a heat carrier comprising a channel-shaped solar collector (1) consisting of supporting segments (10) for mirror segments (11), said support segments protruding on both sides from a support pipe (4), specifying the channel profile by means of an arcuate shape and being arranged next to one another in the direction of the support pipe axis, comprising stands (2) which receive the support pipe (4) and which have, at their ends, bearing receivers (3) with support rollers (6) for rotatably and axially displaceably bearing the support pipe (4), and comprising supporting arms (15), which protrude radially from the support pipe (4), for an absorber pipe (14) extending coaxially with respect to the channel profile of the solar collector (1), **characterised in that** the support pipe (4) which has a cross-section in the form of a regular polygon, preferably a square, is provided in the region of the bearing receivers (3) with bearing rings (5) supported in the axial direction in a slidable manner on the support rollers (6) and engages in a form-fitting manner into centring cut-outs (12, 16) - adapted to the cross-sectional shape of the support pipe (4) - of the supporting segments (10) and the supporting arms (15), and **in that** the supporting arms (15) are designed as flat flexural supports oriented perpendicularly to the support pipe axis and receive the absorber pipe (14) in a heat insulation ring (19).

2. Apparatus as claimed in claim 1, **characterised in that** the bearing receivers (3) form, at the ends of the stands (2), a bearing fork (7) which is open at the top and can be closed by means of a detachable bearing bracket (8).

3. Apparatus as claimed in claim 1 or 2, **characterised in that** the supporting arms (15) have a divided receiver (18) for the likewise divided heat insulation ring (19) for holding the absorber pipe (14).

## Revendications

1. Dispositif de chauffage d'un fluide caloporteur avec un collecteur solaire (1) en forme de canaux sur les deux côtés de segments support (10), alignés les uns à côté des autres en direction de l'axe d'un tube support, éloignés d'un tube support (4) et déterminant le profil de canal par une forme arquée, pour des segments miroirs (11), avec des montants (2) recevant le tube support (4) qui comprennent sur leurs extrémités des logements de palier (3) avec des rouleaux support (6) pour un support mobile en rotation et en déplacement axial du tube support (4), et avec des bras de support (15) éloignés radialement du tube support (4) pour un tube absorbeur (14) s'étendant coaxialement au profil des canaux du collecteur solaire (1), **caractérisé en ce que** le tube support (4), qui possède une section transversale en forme d'un polygone régulier, de préférence un quadrilatère, est prévu dans la zone des logements de palier (3) avec des bagues de support (5) posées de façon coulissante sur les rouleaux support (6) dans la direction axiale, et vient en prise, en complémentarité de forme, dans des évidements de centrage (12, 16) des segments support (10) adaptés à la forme de la section transversale du tube support (4) et dans les bras support (15), et **en ce que** les bras support (15) sont formés comme support courbé plat, aligné perpendiculairement à l'axe du tube support, et logent le tube absorbeur (14) dans un isolant thermique (19).

2. Dispositif selon la revendication 1, **caractérisé en ce que** les logements de palier (3) forment au niveau des extrémités des montants (2) une fourche de palier (7) ouverte vers le haut, pouvant être fermée par un étrier de montage (8) amovible.

3. Dispositif selon la revendication 1 ou 2, **caractérisé en ce que** les bras support (15) comprennent un logement (18) divisé, pour l'isolant thermique (19) également divisé, afin de maintenir le tube absorbeur (14).
